# EUROPÄISCHE PATENTANMELDUNG

(11) **EP 1 837 172 A1**
(43) Veröffentlichungstag der Anmeldung: **26.09.2007**
(21) Anmeldenummer: 07103776.6
(22) Anmeldetag: 08.03.2007
(51) Int. Cl.: B32B 5/18, E04B 1/80, E04C 2/20

(54) **Wärmedämmverbundsystem zur Innendämmung von Gebäuden**

(30) Priorität: 22.03.2006 EP 06111539
(71) Anmelder: BASF Aktiengesellschaft, 67056 Ludwigshafen (DE)
(72) Erfinder: Allmendinger, Markus, 67480, Edenkoben (DE); Alteheld, Armin, 55543, Bad Kreuznach (DE); Hahn, Klaus, 67281, Kirchheim (DE); Ziemer, Antje, 68199, Mannheim (DE); Altmann, Stephan, 67146, Deidesheim (DE); Champ, Samantha, 67063, Ludwigshafen (DE)

(57) **Zusammenfassung**

Verfahren zur Innendämmung von Gebäuden, wobei man auf der Innenseite der Gebäudewand Formteile aus expandiertem Polystyrol anbringt, dadurch gekennzeichnet, dass mindestens eine Außenfläche der Formteile mit einem wasserabsorbierenden Polymer W beschichtet ist.

## Beschreibung

Die Erfindung betrifft Wärmedämmverbundsystem, umfassend eine 5 bis 300 mm dicke Dämmstoffplatte, welche ein- oder beidseitig mit einer 1 bis 150 mm dicken, reversibel wasserspeichernden Schicht versehen ist, Verfahren zur Herstellung und Verwendung zur Innendämmung von Gebäuden.

Außerdem betrifft die Erfindung eine mit einer Innendämmung versehene Gebäudewand, erhältlich nach diesem Verfahren, sowie einen Gebäudeinnenraum, bei dem mindestens eine Wand eine solche mit einer Innendämmung versehene Gebäudewand ist.

Aus den genannten Dämmstoffen hergestellte Formteile, insbesondere Schaumstoffplatten werden u.a. im Bauwesen verwendet, beispielsweise zur Wärmedämmung von Gebäudekellern, -wänden und -dächern. Die Dämmung kann an der an der Außenseite des Kellers, der Wand bzw. des Daches angebracht sein (Außendämmung bzw. bei erdberührten Wänden Perimeterdämmung), oder an der Innenseite (Innendämmung). Eine Innendämmung ist besonders für Gebäude geeignet, deren Außenansicht nicht verändert werden soll, beispielsweise Altbauten oder denkmalgeschützte Gebäude.

Polystyrol-, Polyurethan und Polypropylenschäume sind hydrophob und nehmen keine Feuchtigkeit auf und sind daher sehr beständig gegen Verrottung. Allerdings können bei der Innendämmung durch hinter der Dämmschicht kondensierende Raumluftfeuchtigkeit unerwünschte Feuchtigkeitsschäden am Bauwerk auftreten, beispielsweise Schimmelbildung. Außerdem kann die Dämmschicht die feuchtigkeitsregulierende Wirkung bestimmter Baustoffe (u.a. Ton, Sandstein) vermindern, was zu stärkeren Schwankungen der Luftfeuchtigkeit führt und so das Raumklima verschlechtert. Daher wäre eine Innendämmung mit diesen Schäumen wünschenswert, welche diese Nachteile nicht aufweist.

Die DE 100 00 134 A1 beschreibt ein Verfahren zur Gebäudeaußendämmung, bei dem auf die Gebäudeaußenwand eine flüssige Abdichtung (Bitumen) aufgetragen wird und anschließend Dämmplatten aus z.B. Polystyrolhartschaum auf der nassen Abdichtung verlegt werden, wobei die Platten abdichtungsseitig mit einem Flüssigkeit aufnehmenden Absorber versehen sind. Der Absorber kann u.a. ein vernetztes Acrylat (Superabsorber) oder ein Textil (Gewebe oder Vlies) sein. Eine Gebäudeinnendämmung oder eine "trockene" Verlegung werden nicht beschrieben.

Die EP 459 147 A2 beschreibt expandierbare Styrolpolymerisate, welche zur Erhöhung der Rieselfähigkeit und zur Reduzierung des Gehaltes an organischen Treibmitteln 0,05 bis 3 Gew.-% Wasser und 0,001 bis 1 Gew.-%, bezogen auf Wasser, eines feinteiligen organisches Polymer, z. B. Polyacrylsäure, mit einem Wasseraufnahmevermögen von mindestens 10 g/g enthalten.

Es bestand die Aufgabe, den geschilderten Nachteilen abzuhelfen und ein Wärmedämmverbundsystem bereitzustellen, welches sich insbesondere zur Innendämmung von Gebäuden eignet. Bei den mit dem Wärmedämmverbundsystem gedämmten Gebäudewänden sollte die Gefahr von Feuchtigkeitsschäden wie beispielsweise Schimmelbildung deutlich geringer sein. Das Raumklima des gedämmten Innenraums sollte verbessert sein und sich durch verminderte Luftfeuchtigkeitsschwankungen auszeichnen.

Demgemäß wurden das eingangs genannte Wärmedämmverbundsystem und dessen Verwendung zur Innendämmung von Gebäuden gefunden.

Bevorzugte Ausführungsformen der Erfindung sind den Unteransprüchen zu entnehmen. Alle Druckangaben sind Absolutdrucke.

Als Dämmstoffplatte können beispielsweise Partikelschaumstoffe oder Extrusionsschaumstoffe verwendet werden. Partikelschaumstoffe sind durch Versintern von Schaumpartikeln, beispielsweise aus expandiertem Polyolefinen, wie expandierbarem Polypropylen (EPP) oder vorgeschäumtem Partikeln aus expandierbarem Polystyrol (EPS) erhältlich.

Die Schaumstoffplatten haben in der Regel eine Dichte im Bereich von 10 bis 100 g/l und sind geschlossenzellig, d.h. sie weisen bevorzugt Zellen auf, die zu mindestens 80%, insbesondere zu 95 bis 100 % geschlossenzellig sind. Für eine Verbesserung der Haftung zu Mörtel-, Beton- und Putzsystemen können sie nach der Herstellung und vor der Beschichtung z.B. mit einem Waffelmuster geprägt und gestanzt werden.

Die Schaumstoffplatten weisen in der Regel eine Dicke im Bereich von 5 bis 200 mm, bevorzugt 10 bis 100 mm, besonders bevorzugt 15 bis 80 mm auf. Insbesondere für die Wärmedämmung in Bauanwendungen werden quaderförmige Schaumstoffplatten mit einem Querschnitt von mindestens 50 cm² eingesetzt, bevorzugt 100 bis 2000 cm².

Vorteilhaft können auch Schaumstoffplatten mit einer Wärmeleitfähigkeit von 0,035 W/mK (gemessen nach DIN 52612 bei 10°C) oder darunter eingesetzt werden. Diese können 0,01 bis 10 Gew.-%, bezogen auf das Polymer, eines partikelförmigen IR-Absorbers, wie Ruß, Metallpulver, z. B. Aluminiumpulver und Titandioxid, bevorzugt Graphit mit einer mittleren Partikelgröße von 1 bis 100 µm enthalten.

Schaumstoffplatten aus einem Extrusionsschaum auf Basis eines Styrolpolymeren (XPS) können ebenfalls eingesetzt werden. Bevorzugt werden unter Verwendung halogenfreier Treibmittel hergestellte, gleichmäßige, geschlossenzellige und formstabile extrudierte Polystyrolschaumstoffkörper (XPS) aus einer Polystyrol-Thermoplastikmatrix mit einem mittleren Molekulargewicht M_{w} zwischen 110 000 und 500 000 g/mol und einer Uneinheitlichkeit M_{w}/MₙVon größer als 1,5, wie sie in der EP-A-0 802 220 beschrieben sind. Sie weisen in der Regel eine Druckfestigkeit, gemessen nach DIN EN 826 im Bereich von 0,2 bis 1,0 N/mm², bevorzugt im Bereich von 0,3 bis 0,7 N/mm² auf. Bevorzugt liegt die Dichte, im Bereich von 25 bis 50 g/l.

Das erfindungsgemäße Wärmedämmverbundsystem kann auch einen Polyurethan-Hartschaumstoff (PUR) als Kern enthalten. Hierbei kommen kontinuierlich oder diskontinuierlich hergestellte PU-Hartschaumplatten für Bauanwendungen bzw. Flüssiggasbehälter in Frage. Bevorzugt verwendet man Polyurethan-Schaumstoffe aus Formulierungen, die überwiegend mit Kohlenwasserstoffen und nur zum kleinen Teil wassergetrieben sind. Die Dichte der Hartschaumstoffe beträgt vorzugsweise 10 bis 400 kg/m³, vorzugsweise 10-200, insbesondere 25 bis 150 kg/m³. Hartschaumstoffplatten erreichen die Wärmeleitfähigkeitsklasse 025 bei einer Dichte im Bereich 25 bis 150 g/l. Die Dicke der PU-Sandwichelemente liegt üblicherweise im Bereich 5 bis 150 mm (Kunststoffhandbuch, 3. Auflage, Seite 150), kann aber bis zu 250 mm erreichen.

Polyurethan-Schaumstoffe, insbesondere Polyurethan-Hartschaumstoffe, sind seit langem bekannt und vielfach in der Literatur beschrieben. Ihre Herstellung erfolgt üblicherweise durch Umsetzung von Polyisocyanaten a) mit Verbindungen mit mindestens zwei mit Isocyanatgruppen reaktiven Wasserstoffatomen b), zumeist Polyolen. Der Einsatz von Polyurethan-Hartschaumstoffen erfolgt insbesondere zur Wärmedämmung, beispielsweise von Kühlgeräten, Behältern oder Gebäuden.

Als organische Polyisocyanate a) kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'-und 2,4'-Diphenylmethan-düsocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Als Verbindungen mit mindestens zwei gegenüber Isocyanat reaktiven Wasserstoffatomen b), kommen insbesondere Polyetheralkohole b1) und/oder Polyesteralkohole b2) mit OH-Zahlen im Bereich von 100 bis 1200 mgKOH/g zum Einsatz.

Die gemeinsam mit den Polyetheralkoholen b1) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Polyetheralkohole b1) haben zumeist eine Funktionalität zwischen 2 und 8, insbesondere 3 bis 8. Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz. Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Zu den Verbindungen mit mindestens zwei gegenüber Isocyanat reaktiven Wasserstoffatomen b1) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Das Verfahren zur Herstellung der Polyurethanschaumstoffe wird weiterhin in Anwesenheit von Katalysatoren b3) sowie, falls erforderlich weiteren , Hilfs- und/oder Zusatzstoffen durchgeführt.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre oder tertiäre aliphatische Amine, Imidazole, Amidine, sowie Alkanolamine. Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Flammenschutzmittel b4) können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphoshonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibombutendiols. Auch Verbindungen, die sich aus der Reihe der bromierten, OH-Gruppen enthaltenden Neopentylverbindungen ableiten, können zur Anwendung kommen.

Das Verfahren wird üblicherweise in Anwesenheit von Treibmitteln, Katalysatoren und Zellstabilisatoren sowie, falls erforderlich weiteren , Hilfs- und/oder Zusatzstoffen durchgeführt.

Als Treibmittel b5) kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Als Hilfsmittel und/oder Zusatzstoffe b6) kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Polyolkomponente b) in solchen Mengen zur Umsetzung gebracht, dass der Isocyanatindex in einem Bereich zwischen 80 und 220, vorzugsweise zwischen 100 und 200, liegt, für Polyisocyanurat-Hartschaumstoffe kann der Index bis zu 450 betragen.

Die Polyurethan-Hartschaumstoffe können diskontinuierlich oder kontinuierlich mit Hilfe bekannter Mischvorrichtungen hergestellt werden.

Üblicherweise werden die PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b1) bzw. b2), mit den Katalysatoren b3), den Flammschutzmitteln b4), Treibmitteln b5) sowie den weiteren Hilfs- und/oder Zusatzstoffen b6) zu der Polyolkomponente b) vermischt und diese mit den Polyisocyanaten oder Mischungen aus den Polyisocyanaten a) und gegebenenfalls Treibmitteln, auch als Isocyanatkomponente bezeichnet, zur Umsetzung gebracht.

Die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die ursprünglichen Komponenten in bis zu 8 Einzelkomponenten aufgeteilt werden. Die Verschäumrezepturen lassen sich, abgeleitet von dem Zwei-Komponentenverfahren in einfacher Weise auf die Verarbeitung von Mehrkomponentensystemen umrechnen. Beim Doppelbandverfahren werden Polyol- und Isocyanatkomponente zumeist bei einer Temperatur von 15 bis 35°C, vorzugsweise von 20 bis 30°C mit einer Hochdruckmaschine dosiert und in einem Mischkopf vermischt. Dem Polyolgemisch können zuvor mit separaten Pumpen Katalysatoren und /oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

In einer alternativen Herstellungsvariante kann das Reaktionsgemisch mit Hoch- oder Niederdruckdosiermaschinen in geschlossene Stützwerkzeuge gegossen werden. Nach dieser Technologie werden z. B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren oder sehr voluminöse Schaumstoffblöcke herstellen.

### Formteile aus expandiertem Polystyrol

Schaumstoff-Formteile aus expandiertem Polystyrol können sogenannte Partikelschäume (nachfolgend A) bis C)) oder Extrusionsschäume (nachfolgend D)) sein. Partikelschäume werden in der Regel in einem mehrstufigen Verfahren hergestellt. Dabei stellt man zunächst expandierbares Polystyrol (EPS) her, was nach verschiedenen Verfahren erfolgen kann:
A) durch Suspensionspolymerisation von Styrol oder anderer vinylaromatischer Monomere bzw. Comonomere in Gegenwart von Treibmitteln, wodurch unmittelbar treibmittelhaltige EPS-Partikel entstehen
B) durch Imprägnieren von treibmittelfreien Polystyrolpartikeln mit dem Treibmittel unter Druck in einer erhitzten Suspension, wobei das Treibmittel in die erweichten Partikel diffundiert; beim Abkühlen der Suspension unter Druck erhält man treibmittelhaltige EPS-Partikel
C) im sog. Extrusionsverfahren durch Einmischen des Treibmittels in eine Polystyrolschmelze mittels eines Extruders oder einer anderen Mischvorrichtung; die treibmittelhaltige Schmelze wird unter Druck ausgetragen und z.B. mittels Unterwasserdruckgranulierung zu EPS-Partikeln granuliert.

Die erhaltenen Partikel können kompakt (dies ist bevorzugt) oder bereits in geringem Ausmaß angeschäumt sein.

Bei dem anschließenden sog. Vorschäumen werden die treibmittelhaltigen EPS-Partikel durch Erwärmen, üblicherweise mit Wasserdampf, expandiert und man erhält treibmittelhaltige, partiell expandierte Partikel. Diese vorgeschäumten Partikel werden üblicherweise zwecks teilweisem Austausch des Treibmittels gegen Luft zwischengelagert. Schließlich wird beim sog. Ausschäumen eine dem gewünschten Schaumstoffkörper entsprechende Form vollständig mit den zwischengelagerten Partikeln gefüllt, verschlossen und (in der Regel ebenfalls mit Wasserdampf) erhitzt. Dabei expandieren die Partikel nochmals und verschweißen miteinander zu dem fertigen Formkörper aus EPS-Schaumstoff (Partikelschaum).

Sofern die Formteile solche aus Partikelschaum sind, erhält man die vorgeschäumten Partikel demnach bevorzugt A) durch Suspensionspolymerisation von Styrol und ggf. Comonomeren in Gegenwart eines Treibmittels, oder B) durch Imprägnierung von Polystyrol mit einem Treibmittel in erhitzter Suspension, oder C) durch Einmischen eines Treibmittels in eine Polystyrolschmelze in einer Mischvorrichtung (z.B. Extruder) mit anschließender Granulierung (z.B. Unterwasserdruckgranulierung), woran sich jeweils das Vorschäumen anschließt.

Extrusionsschäume D) aus Polystyrol (XPS) werden durch Einmischen des Treibmittels in eine Polystyrolschmelze mittels eines Extruders oder einer anderen Mischvorrichtung hergestellt, wobei - im Unterschied zu den EPS-Partikelschäumen C) - die treibmittelhaltige Schmelze unmittelbar in die Umgebung austritt und nicht unter Druck ausgetragen wird. Beim Austritt aus der Extruderdüse schäumt die Schmelze auf. Sie wird üblicherweise kontinuierlich abgezogen und dabei zu einem Band geformt, das sich beim Abkühlen zu einem festen Schaum verfestigt. Der Schaum wird anschließend zu Platten oder anderen Formteilen zerteilt.

Bei der vorliegenden Erfindung wird Polystyrol als Sammelbegriff für Homopolymere und Copolymere des Styrols oder anderer vinylaromatischer Monomere, sowie als Sammelbegriff für Blends dieser Polymere mit anderen Polymeren, verwendet. Unter Polystyrol sind beispielsweise Standard-Polystyrol (General Purpose Polystyrene, GPPS, üblicherweise glasklar), schlagzähes Polystyrol (High Impact Polystyrene, HIPS, enthaltend z.B. Polybutadien- oder Polyisoprenkautschuk), Styrol-Maleinsäure-(anhydrid)-Polymerisate, Acrylnitril-Butadien-Styrol-Polymerisate (ABS), Styrol-Acrylnitril-Polymerisate (SAN), Acrylnitril-Styrol-Acrylester (ASA) oder deren Mischungen, zu verstehen. Bevorzugtes Polystyrol ist Standard-Polystyrol.

Weiterhin steht Polystyrol auch für Blends aus den vorgenannten Polymeren mit Polyphenylenethern (PPE) oder anderen thermoplastischen Polymeren.

Der Begriff Styrol wird hier analog als Sammelbegriff für die eingesetzten Monomere, also Styrol als solches, andere vinylaromatische Monomere und sonstige Comonomere, verwendet.

Als Treibmittel eigenen sich die üblicherweise in Partikel- bzw. Extrusionsschäumen eingesetzten physikalischen Treibmittel, wie aliphatische Kohlenwasserstoffe mit 2 bis 7 Kohlenstoffatomen, Alkohole, Ketone, Ether, halogenierte Kohlenwasserstoffe oder Wasser, oder deren Mischungen. Bevorzugt wird iso-Butan, n-Butan, iso-Pentan oder n-Pentan, bzw. deren Mischungen, eingesetzt.

Wie erwähnt kann das Treibmittel je nach Herstellungsverfahren des Schaums z.B. bei der Polymerisation des Styrols, durch Imprägnierung der Polystyrolpartikel in erhitzter Suspension oder durch Einmischen in eine Polystyrolschmelze im Extruder, eingebracht werden. Die Menge des Treibmittels beträgt je nach Verfahren 0,5 bis 15, bevorzugt 1 bis 10 und insbesondere 2 bis 8 Gew.-%, bezogen auf das eingesetzte Polystyrol.

Bei der Herstellung der Partikel kann man übliche Additive mitverwenden, z.B. Keimbildner, Weichmacher, IR-Absorber wie Ruß und Graphit, Aluminiumpulver, lösliche und unlösliche Farbstoffe und Pigmente sowie Flammschutzmittel. Die Additive werden in den dafür üblichen Mengen eingesetzt. Geeignete Keimbildner (Nukleierungsmittel) sind z.B. Talkum und/oder Wachse sowie Ruß, Graphit und pyrogene Kieselsäuren, in Mengen von insgesamt 0,05 bis 30 Gew.-%, bezogen auf das eingesetzte Polystyrol. Bevorzugte Weichmacher sind Mineralöle, oligomere Styrolpolymere und Phthalate in Mengen von insgesamt 0,05 bis 10 Gew.-%, bezogen auf das eingesetzte Polystyrol. Je nach Art der EPS-Herstellung sowie Art und Zweck des Additivs kann es vor, während und/oder nach der Styrolpolymerisation, der Imprägnierung bzw. der Extrusion zugefügt werden.

Beim Vorschäum-Schritt der Partikelschaumherstellung werden die EPS-Partikel in an sich bekannter Weise expandiert. Die Erwärmung erfolgt üblicherweise durch Wasserdampf oder Heißluft.

Um zu verhindern, dass die Partikel bereits beim Vorschäumen vorzeitig miteinander verschweißen, liegen beim Vorschäumen die Partikel bevorzugt als lockere Schüttung vor. Lockere Schüttung bedeutet, dass die Kontaktflächen der Partikel miteinander klein sind, und die Schüttdichte, d.h. der Quotient aus Partikelmasse und eingenommenem Volumen einschließlich der Zwischenräume zwischen den Partikeln, gering ist. Eine geringe Schüttdichte bedeutet große Zwischenräume zwischen den Partikeln.

Die Verfahrensbedingungen beim Vorschäumen, z.B. Temperatur, Druck und Dauer des Vorschäumens, Dichte und Bewegungsgeschwindigkeit der Schüttung, sind in der beschriebenen Weise derart zu wählen, dass die Partikel noch nicht oder nur in untergeordnetem Ausmaß miteinander verschweißen. Ein geringer Anteil solcher vorzeitig verschweißter Partikel (Agglomerate), beispielsweise bis 10 Gew.-% bezogen auf die vorgeschäumten Partikel, ist üblicherweise unproblematisch. Ist der Agglomeratanteil größer, so kann er durch Klassieren, z.B. durch Sieben der Partikel mit entsprechender Maschenweite oder durch Windsichten, abgetrennt werden.

Nach dem Vorschäumen liegen die Partikel partiell expandiert vor. Üblicherweise beträgt die Schüttdichte der vorgeschäumten Partikel 5 bis 50, bevorzugt 5 bis 40 und insbesondere 8 bis 30 g/l, ermittelt nach DIN EN ISO 60.

Falls gewünscht werden die vorgeschäumten Partikel an der Luft bei 0 bis 80, bevorzugt 10 bis 40°C für eine Dauer von 1 bis 48, bevorzugt 4 bis 24 Stunden zwischengelagert, wobei die Umgebungsluft in die Partikel eindiffundiert und einen Teil des eingeschlossenen Treibmittels verdrängt. Die eingetretene Luft erleichtert das Ausschäumen und erhöht die Stabilität des Schaums.

Beim anschließenden Ausschäumen werden die vorgeschäumten Partikel in eine Form gefüllt. Die Geometrie (Raumform) der Form entspricht üblicherweise der gewünschten Geometrie des späteren Formteils. Für Schaumstoffplatten ist beispielsweise eine einfache quaderförmige Form geeignet. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen. Da die Partikel beim Ausschäumen miteinander verschweißen sollen, ist es vorteilhaft, die Form randvoll mit den Partikeln zu füllen, um das Leervolumen in der Form gering zu halten.

Das Ausschäumen erfolgt üblicherweise durch Erwärmen der gefüllten Form mit Wasserdampf, Heißluft oder einem anderen Wärmeüberträger auf beispielsweise 60 bis 120, bevorzugt 70 bis 110°C. Dabei verschweißen die Partikel zu dem Formteil, indem die Zwischenräume in der Partikelschüttung durch die expandierenden Partikel ausgefüllt werden und die erweichten Partikel miteinander "verschmelzen".

Der Druck beim Ausschäumen ist üblicherweise nicht kritisch und beträgt in der Regel 0,05 bis 2 bar. Die Dauer des Ausschäumens hängt u.a. von Größe und Geometrie sowie der gewünschten Dichte des Formteils ab und kann in weiten Grenzen variieren.

Der beim Ausschäumen erhaltene Partikelschaum (siehe A) bis C) weiter oben) der Partikelschaum-Formteile weist üblicherweise eine Dichte von 5 bis 100, bevorzugt 8 bis 80 und besonders bevorzugt 10 bis 60 g/l auf, bestimmt gemäß DIN 53420. Die Formteile weisen bevorzugt keinen ausgeprägten Dichtegradienten auf, d.h. die Randschichten haben keine deutlich höhere Dichte als die inneren Bereiche des Formteils.

Sofern der Schaum ein Extrusionsschaum D) ist, beträgt seine Dichte in der Regel 10 bis 100, bevorzugt 12 bis 80 und insbesondere 15 bis 60 g/l, bestimmt gemäß DIN 53420.

Die genannten Dichten verstehen sich ohne die Beschichtung der Formteil-Außenfläche(n) mit dem wasserabsorbierenden Polymer W.

Es ist auch möglich, als Formteil zunächst Blöcke herzustellen und die Blöcke anschließend in Platten zu zerteilen, beispielsweise durch Schneiden oder Sägen.

### Ausstattung mit dem wasserabsorbierenden Polymer W

Das erfindungsgemäße Wärmedämmverbundsystem weist ein- oder beidseitig eine 1 bis 150 mm dicke, vorzugsweise 1 bis 5 mm dicke, insbesondere 2 bis 3 mm dicke, reversibel wasserspeichernde Schicht aus vorzugsweise 5 bis 100 Gew.-% eines wasserabsorbierenden Polymeren W auf. Das wasserabsorbierende Polymer W ist bevorzugt ein Säuregruppen tragendes Polymer, insbesondere vernetzte oder teilvernetzte Polyacrylsäure, Polymethacrylsäure oder ein Copolymer auf Basis von Acrylsäure ist, deren Säuregruppen zu 10 bis 90 mol-% neutralisiert sind. Sie werden im allgemeinen in feinteiliger Form mit einer mittleren Teilchengröße im Bereich von 1 bis 100 µm und einem Wasseraufnahmevermögen im Bereich von 10 bis 360 g/g, insbesondere im Bereich von 20 bis 250 g/g, eingesetzt.

Erfindungsgemäß ist mindestens eine Außenfläche der Formteile mit einem wasserabsorbierenden Polymer W beschichtet. Im einfachsten Fall verwendet man zur Beschichtung das wasserabsorbierende Polymer W als solches. Anstelle des Polymers W oder in Mischung damit kann man auch mit den zur Herstellung des Polymers W erforderlichen Ausgangsstoffen, insbesondere den geeigneten Monomeren und ggf. Hilfsstoffen, beschichten und daraus erst während des Beschichtens und/oder nach dem Beschichten das Polymer W herstellen. Beispielsweise kann man mit Monomeren beschichten und anschließend deren Polymerisation durch UV-Strahlung oder thermisch initiieren.

Das Beschichten mit dem Polymer W bzw. dessen Ausgangsstoffen erfolgt in üblicher Weise, beispielsweise durch Sprühen, Spritzen, Streichen, Rollen oder Gießen auf die Formteiloberfläche (Außenfläche), durch Eintauchen des Formteils in das Polymer W bzw. dessen Ausgangsstoffe, oder durch Schwimmenlassen des Formteils auf dem Polymer W bzw. dessen Ausgangsstoffen, oder andere Beschichtungsmethoden. Zum Beschichten werden die für die jeweilige Beschichtungsmethode üblichen Vorrichtungen verwendet.

Als wasserabsorbierendes Polymer W bevorzugt ist insbesondere ein Säuregruppen tragendes Polymer, dessen Säuregruppen zu 10 bis 90 mol-% neutralisiert sind. Besonders bevorzugt sind 35 bis 80, insbesondere 40 bis 75 mol-% der Säuregruppen neutralisiert.

Besonders bevorzugt ist das wasserabsorbierende Polymer W ein Polymer auf Basis einer vernetzten Acrylsäure. Nähere Angaben zu solchen Polymeren, die auch als Superabsorber bezeichnet werden, finden sich weiter unten bei Ausführungsform II).

Es versteht sich, dass auch Mischungen verschiedener wasserabsorbierender Polymere W verwendet werden können.

Falls erforderlich, kann man das Polymer W in einem geeigneten Lösungsmittel lösen bzw. in einem geeigneten Dispersionsmittel dispergieren und dann die erhaltene Lösung, Suspension bzw. Emulsion auf das Formteil aufbringen.

In einer Ausführungsform I) wird beim Beschichten eine Polymerdispersion PD mitverwendet. Bevorzugt handelt es sich um eine wässrige Dispersion mit einem Feststoffgehalt von 10 bis 60, besonders bevorzugt 20 bis 50 Gew.-%.

Ebenfalls bevorzugt enthält diese Dispersion PD Polymere auf Basis von Monomeren, die ausgewählt sind aus vinylaromatischen Monomeren, Dienen, α,β-ungesättigten Carbonsäuren, Estern oder Amiden dieser Carbonsäuren, und Alkenen.

Geeignete vinylaromatische Monomere sind z.B. Styrol, α-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Styrol ist besonders bevorzugt. Als Diene kommen alle polymerisierbaren Diene in Betracht, insbesondere 1,3-Butadien, 1,3-Pentadien, 1,3-Hexadien, 2,3-Dimethylbutadien, Isopren, Piperylen oder Mischungen davon. Bevorzugt sind 1,3-Butadien (kurz: Butadien), Isopren oder deren Mischungen.

Als α,β-ungesättigte Carbonsäuren eignen sich insbesondere Acrylsäure und Methacrylsäure. Geeignete Carbonsäureester sind beispielsweise die C₁₋₁₀-Alkylester der Acrylsäure, insbesondere die Butylester, vorzugsweise n-Butylacrylat, und die C₁₋₁₀-Alkylester der Methacrylsäure, insbesondere Methylmethacrylat (MMA).

Als Carbonsäureamide eignen sich insbesondere Acrylsäureamid und Methacrylsäureamid, sowie OH-substituierte Carbonsäureamide wie insbesondere Methylolacrylamid.

Geeignete Alkene sind insbesondere Ethylen (Ethen) und Propylen (Propen). Man kann ein Homopolymer verwenden, beispielsweise eine Dispersion von Polyethylen oder Polypropylen, oder - bevorzugt - alkenhaltige Copolymere. Gut geeignet sind z.B. Coplymere aus Propylen und Carbonsäuren bzw. Carbonsäureverbindungen der obigen Formel I, beispielsweise Acrylsäure oder Methacrylsäure oder den genannten Acrylsäurealkylestern oder Methacrylsäurealkylestern. Derartige Produkte sind beispielsweise als Poligen® von BASF erhältlich. Eine geeignete Polymerdispersion ist z.B. eine solche aus Propylen-Alkylacrylat-Copolymer.

Außerdem kann man als Comonomere zur Herstellung der Polymerdispersion PD mitverwenden: jeweils 1 bis 5 Gew.-% (Meth)acrylnitril, (Meth)acryl-amid, Ureido(meth)-acrylat, 2-Hydroxyethyl(meth)acrylat, 3-Hydroxypropyl(meth)acrylat, Acrylamidpropansulfonsäure (verzweigt oder unverzweigt) oder das Natriumsalz der Vinylsulfonsäure.

Bevorzugt sind die Monomere des Polymeren für die Polymerdispersion PD ausgewählt aus Styrol, Butadien, Acrylsäure, Methacrylsäure, C₁₋₄-Alkylacrylaten, C₁₋₄-Alkylmethacrylaten, Acrylsäureamid, Methacrylsäureamid und Methylolacrylsäureamid.

Die Polymerdispersion PD kann unvernetzt oder vernetzt sein und weist bevorzugt eine Glasübergangstemperatur von -60 bis +140°C, bevorzugt -20 bis +80°C auf, bestimmt mittels Differential Scanning Calorimetry (DSC) an dem Polymerpulver, das durch Sprühtrocknung der entsprechenden Polymerdispersion erhalten wurde.

Bevorzugte Polymerdispersionen PD enthalten ein Polymer auf Basis von
1) Styrol, oder
2) Styrol und n-Butylacrylat, oder
3) n-Butylacrylat, MMA, Methacrylsäure, Acrylamid und Methylolacrylamid, oder
4) Styrol und den bei 3) genannten Monomeren.

Die Herstellung der Polymerdispersion PD erfolgt in an sich bekannter Weise, etwa durch Emulsions-, Suspensions-, oder Dispersionspolymerisation in flüssiger Phase. Soll die Polymerdispersion eine wässrige sein, polymerisiert man bevorzugt in wässriger Phase. Man kann das Polymer auch durch Lösungs- oder Massepolymerisation herstellen, ggf. zerteilen und die Polymerpartikel anschließend in Wasser (oder einem anderen Dispersionsmittel, siehe oben) in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mitverwendet; und man polymerisiert kontinuierlich oder diskontinuierlich bei den für das jeweilige Verfahren üblichen Temperaturen und Drucken in gebräuchlichen Reaktoren.

Die Polymerdispersion PD kann zusammen mit dem wasserabsorbierenden Polymer W auf das Formteil aufgebracht werden, beispielsweise als Mischung enthaltend Polymerdispersion PD und Polymer W. Jedoch bringt man PD und W bevorzugt getrennt voneinander auf das Formteil auf. Besonders bevorzugt wird das Formteil (genauer: die zu beschichtende Fläche des Formteils) zunächst mit der Dispersion PD und danach mit dem Polymer W beschichtet.

Dabei wird die Menge der Polymerdispersion PD bevorzugt derart gewählt, dass sie vollständig auf die Formteiloberfläche aufzieht. Nach dem Aufbringen der Dispersion kann man die in der Dispersion enthaltenen flüchtigen Hilfsstoffe, z.B. Wasser, durch Trocknen mit Warmluft o.ä., oder durch einfaches Verdunstenlassen entfernen. Zwingend erforderlich dies jedoch nicht, d.h. das mit der Dispersion PD beschichtete Formteiloberfläche kann auch in noch feuchtem Zustand mit dem wasserabsorbierenden Polymer W beschichtet werden.

In einer weiteren Ausführungsform II) ist die mindestens eine Außenfläche der Formteile mit einem Verbundstoff versehen, welcher das wasserabsorbierende Polymer W enthält. Dieser Verbundstoff ist eine Beschichtung im Sinne der Erfindung.

In Betracht kommen insbesondere Verbundstoffe, welche umfassen
a) mindestens ein flächiges Trägermaterial,
b) ggf. mindestens eine wasserlösliche hygroskopische Substanz und
c) mindestens ein auf das Trägermaterial a) aufpolymerisiertes wasserabsorbierendes Polymer.

Die Komponente b), wasserlösliche hygroskopische Substanz, ist fakultativ. Sofern sie vorhanden ist, liegt das Gewichtsverhältnis von hygroskopischer Substanz b) zu Polymer c) in der Regel im Bereich von 0,01 bis 1. Insbesondere beträgt dieses Gewichtsverhältnis weniger als 0,8, bevorzugt weniger als 0,6, besonders bevorzugt weniger als 0,5, ganz besonders bevorzugt weniger als 0,4, und mindestens 0,05, bevorzugt mindestens 0,1, besonders bevorzugt mindestens 0,15. Sofern man eine wasserlösliche hygroskopische Substanz b) verwendet, wird das wasserabsorbierende Polymer c) bevorzugt in Gegenwart dieser Substanz b) aufpolymerisiert.

Die Trägermaterialien a) unterliegen keiner Beschränkung. Bevorzugte Trägermaterialien sind Gewebe und/oder Vliese, wie in der WO 01/56625 auf Seite 16, Zeile 40 bis Seite 20, Zeile 27, beschrieben werden, oder Mischformen aus Geweben und Vliesen wie beispielsweise in WO 2004/067826 offenbart.

Geeignete Trägermaterialien a) sind beispielsweise Gewebe oder Vliese aus synthetischen polymeren Fasern oder Glasfasern. Die Fasern können aus jedem spinnbaren polymeren Material sein, beispielsweise Polyolefine, wie Polyethylen oder Polypropylen, Polyester, wie Polyethylenterephthalat, Polyamide, wie Polyamid 6 oder Polyamid 6.6, Polyacrylate, oder modifizierte Zellulosen wie Zelluloseacetat. Weiterhin können auch Gemische obengenannter polymeren Materialien eingesetzt werden.

Gewebe sind Erzeugnisse aus gekreuzten Fasern, vorzugsweise rechtwinklig gekreuzten Fasern.

Vliese sind nicht gewebte Erzeugnisse aus Fasern, bei denen der Zusammenhalt im allgemeinen durch die den Fasern eigene Haftung gegeben ist. Vorzugsweise werden Vliese mechanisch verfestigt, beispielsweise durch Vernadeln, Vermaschen oder Verwirbeln mittels scharfer Wasser- oder Luftstrahlen. Vliese können auch adhäsiv oder kohäsiv verfestigt werden. Adhäsiv verfestigte Vliese sind beispielsweise erhältlich durch Verkleben der Fasern mit flüssigen Bindemitteln oder durch Schmelzen von Bindefasern, die dem Vlies bei der Herstellung zugesetzt wurden. Kohäsiv verfestigte Vliese sind beispielsweise durch Anlösen der Fasern mit geeigneten Chemikalien und Anwendung von Druck.

Die Trägermaterialien weisen zweckmäßigerweise ein Flächengewicht von 20 bis 800 g/m², vorzugsweise von 50 bis 600 g/m², besonders bevorzugt von 60 bis 400 g/m², auf. Die Dichte der Trägermaterialien beträgt üblicherweise 0,005 bis 0,2, bevorzugt 0,008 bis 0,16 und insbesondere 0,01 bis 0,14 g/cm³.

Hygroskopische Substanzen b) sind Stoffe, die in der Lage sind Wasserdampf zu absorbieren, d.h., Wasserdampf aus der Luft kondensiert auf der hygroskopischen Substanz, wobei der Wassergehalt der hygroskopischen Substanz b) steigt. Hygroskopische Substanzen b) sind beispielsweise anorganische Salze, wie Natriumchlorid, Bleinitrat, Zinksulfat, Natriumperchlorat, Chromoxid oder Lithiumchlorid, oder zumindest teilkristalline organische Verbindungen, wie wasserlösliche Polyacrylsäuren. Bevorzugt als hygroskopische Substanzen b) sind hygroskopische anorganische Salze. Ganz besonders bevorzugt ist Natriumchlorid.

Besonders vorteilhafte hygroskopische Substanzen b) sind Verbindungen, bei denen sich über einer gesättigten wässrigen Lösung bei 20°C im Gleichgewicht eine relative Feuchte von weniger als 95 %, vorzugsweise weniger als 90 %, bevorzugt weniger als 85 %, besonders bevorzugt weniger als 80 %, und von mindestens 40 %, vorzugsweise mindesten 45 %, bevorzugt mindestens 50 %, besonders bevorzugt mindestens 55 %, ganz besonders bevorzugt mindesten 60 %, einstellt. Die relative Feuchte ist der Quotient aus Wasserdampfpartialdruck und Wasserdampfdruck multipliziert mit 100 %.

Vorzugsweise liegt die hygroskopische Substanz b) im aufpolymerisierten wasserabsorbierenden Polymer verteilt vor.

Die Verbundstoffe der Ausführungsform II) können durch Polymerisation einer Monomerlösung, enthaltend
i) mindestens ein ethylenisch ungesättigtes Monomer,
ii) ggf. mindestens eine wasserlösliche hygroskopische Substanz,
iii) mindestens einen Vernetzer,
iv) gegebenenfalls ein oder mehrere mit den unter i) genannten Monomeren copolymerisierbare ethylenisch und/oder allylisch ungesättigte Monomere und
v) gegebenenfalls ein oder mehrere wasserlösliche Polymere,
welche auf ein Trägermaterial aufgebracht und polymerisiert wird, erhalten werden. Die Komponente ii), wasserlösliche hygroskopische Substanz, ist fakultativ. Sofern sie vorhanden ist, liegt das Gewichtsverhältnis von hygroskopischer Substanz ii) zu Monomer i) bevorzugt im Bereich von 0,01 bis 1.

Das Gewichtsverhältnis von hygroskopischer Substanz ii) - sofern vorhanden - zu Monomer i) beträgt vorzugsweise höchstens, insbesondere weniger als 0,8, bevorzugt höchstens, insbesondere weniger als 0,6, besonders bevorzugt höchstens, insbesondere weniger als 0,5, ganz besonders bevorzugt höchstens, insbesondere weniger als 0,4, und mindestens 0,05, bevorzugt mindestens 0,1, besonders bevorzugt mindestens 0,15.

Geeignete Monomere i) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Bevorzugt sind saure Gruppen enthaltende Monomere i). Besonders bevorzugte Monomere sind Acrylsäure und Methacrylsäure. Ganz besonders bevorzugt ist Acrylsäure.

Die Monomere i), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 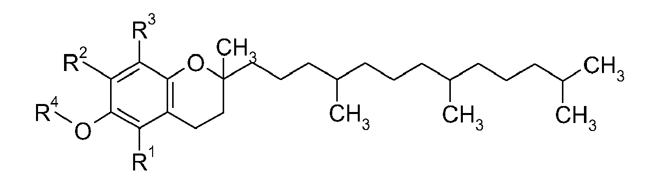 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinonhalbether, jeweils bezogen auf Acrylsäure, wobei Acrylsäuresalze rechnerisch als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die ggf. verwendeten hygroskopischen Substanzen ii) wurden bereits oben als hygroskopische Substanzen b) beschrieben.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können ("Vernetzer"), durchgeführt, so dass das hergestellte Polymer einen entsprechenden Anteil des Vernetzers enthält, selbstverständlich in einpolymerisierter Form. Geeignete Vernetzer iii) sind beispielsweise Ethylenglykoldimethacrylat, Diethylenglykoldiacrylat, Allylmethacrylat, Trimethylolpropantriacrylat, Triallylamin, Tetraallylethoxyethan, wie in EP-A 530 438 beschrieben, Di- und Triacrylate, wie in EP-A 547 847, EP-A 559 476, EP-A 632 068, WO 93/21237, WO 03/104299, WO 03/104300, WO 03/104301 und in DE-A 103 31 450 beschrieben, gemischte Acrylate, die neben Acrylatgruppen weitere ethylenisch ungesättigte Gruppen enthalten, wie in DE-A 103 314 56 und der DE-A 103 55 401 beschrieben, oder Vernetzermischungen, wie beispielsweise in DE-A 195 43 368, DE-A 196 46 484, WO 90/15830 und WO 02/32962 beschrieben.

Geeignete Vernetzer iii) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallylethoxyethan, Triallylamin, Tetraallylethylendiamin, Allylester der Phosphorsäure sowie Vinylphosphonsäurederivate, wie sie beispielsweise in EP-A 343 427 beschrieben sind. Weiterhin geeignete Vernetzer iii) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer iii) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, inbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Die Menge an Vernetzer iii) beträgt vorzugsweise mindestens 0,001 mol-%, besonders bevorzugt mindestens 0,005 mol-%, ganz besonders bevorzugt mindestens 0,01 mol-%, und vorzugsweise bis zu 10 mol-%, besonders bevorzugt bis zu 5 mol-%, ganz besonders bevorzugt bis zu 2 mol-%, jeweils bezogen auf das Monomer i).

Mit den Monomeren i) copolymerisierbare ethylenisch ungesättigte Monomere iv) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Falls man Comonomere iv) mitverwendet, beträgt ihre Menge üblicherweise 0,01 bis 50, bevorzugt 0,1 bis 20 und besonders bevorzugt 1 bis 10 mol-%, bezogen auf das Monomer i).

Als wasserlösliche Polymere v) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Falls wasserlösliche Polymere v) mitverwendet werden, beträgt deren Menge in der Regel 0,01 bis 50, bevorzugt 0,1 bis 20 und besonders bevorzugt 1 bis 10 mol-%, bezogen auf das Monomer i).

Hygroskopische Polymere, wie lösliche Polyacrylsäuren, können sowohl als hygroskopische Substanz ii) als auch als wasserlösliches Polymer v) eingesetzt werden.

Werden der Monomerlösung übliche Pfropfpolymerisationskatalysatoren, beispielsweise Eisensalze, zugesetzt, so werden die Polymere als Pfropfgrundlage für die Polymerisation dienen und die polymerisierenden Monomere auf die Polymeren aufgepfropft werden. Wird auf den Einsatz von Pfropfpolymerisationskatalysatoren verzichtet, so werden die Polymeren die Polymerisation weitgehend unverändert überstehen und als hygroskopische Substanz wirken.

Die Säuregruppen der bevorzugten Monomere i) sind üblicherweise teilweise neutralisiert, vorzugsweise zu 10 bis 90 mol-%, bevorzugt zu 35 bis 80 mol-%, besonders bevorzugt zu 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die wässrige Monomerlösung wird auf das Trägermaterial aufgebracht, vorzugsweise aufgesprüht. Die geeigneten Trägermaterialien wurden bereits oben als Trägermaterial a) beschrieben.

Anschließend wird die Monomerlösung auf dem Trägermaterial polymerisiert und der Verbundstoff getrocknet. Die Polymerisation wird vorzugsweise durch UV-Strahlung und/oder thermisch induziert. Wie üblich bei derartigen Polymerisationsreaktionen kann zur Beschleunigung oder Kontrolle des Starts der Polymerisationsreaktion ein Initiator verwendet werden; hier ist die Verwendung jedes bekannten Initiators oder Initiatorsystems in üblicher Weise möglich.

In einer bevorzugten Ausführungsform der Erfindung enthalten die Polymere c) mindestens einen Weichmacher, der der Monomerlösung vor der Polymerisation zugesetzt wird und im Polymeren verbleibt. Unter "Weichmacher" wird im Zusammenhang mit dieser Erfindung eine Substanz verstanden, die in der angewendeten Menge die Glasübergangstemperatur des Polymeren c) absenkt. Im Allgemeinen senkt der Weichmacher in der zu verwendenden Menge die Glasübergangstemperatur des Polymeren um mindestens 2°C, vorzugsweise mindestens 4°C, in besonders bevorzugter Weise um mindestens 6°C und in ganz besonders bevorzugter Weise um mindestens 10°C ab. Beispielsweise wird ein Weichmacher in einer Menge zugesetzt, die die Glasübergangstemperatur des Polymeren um mindestens 20°C oder um mindestens 30°C absenkt. Die Glasübergangstemperatur ist eine bekannte Eigenschaft von Polymeren und kann nach der Methode ASTM E1356-03 "Standard Test Method for Assignment of the Glass Transition Temperatures by Differential Scanning Calorimetry" oder der äquivalenten Norm ISO 11357-2 gemessen werden.

Übliche Weichmacher sind bei Raumtemperatur flüssig und sind auch Lösungs- oder Dispersionsmittel für das Polymere. Sofern das Polymere durch UV-Bestrahlung aus dem Monomeren erzeugt wird, ist ein gegen UV-Licht ausreichend stabiler Weichmacher zu wählen, der zudem die UV-induzierte Polymerisation nicht stört. Vorzugsweise ist der Weichmacher hydrophil und mit Wasser unbegrenzt mischbar. Geeignete Weichmacher sind beispielsweise Alkohole, Polyalkohole wie Glycerin und Sorbit, Glykole und Etherglykole wie Mono- oder Diether von Polyalkylenglykolen, Mono- oder Diester von Polyalkylengklykolen, Polyethylenglykole, Polypropylenglykole, gemischte Polyethylen- und Propylenglyklole, Glykolate, Glycerol, Sorbitanester, Zitronen- und Weinsäureester oder vom Imidazolin abgeleitete amphotere Tenside. Bevorzugte Weichmacher sind Polyalkohole wie Glycerin und Sorbit, Polyethylenglykol und ihre Mischungen. Besonders bevorzugt ist Glycerin.

Der Weichmacher wird üblicherweise in einer Menge zugesetzt, die zum Erreichen der gewünschten Absenkung der Glasübergangstemperatur ausreicht. Typische Gehalte an Weichmacher sind 5 bis 50 Gew.-Teile, bevorzugt 8 bis 40 Gew.-Teile, insbesondere 10 bis 30 Gew.-Teile Weichmacher bezogen auf 100 Gew.-Teile Monomer i).

Der das wasserabsorbierende Polymer W enthaltende Verbundstoff (= Ausführungsform II)) wird demnach bevorzugt durch die Polymerisation der beschriebenen Monomerlösung auf dem Trägermaterial erhalten. Bevorzugt beträgt der Anteil des wasserabsorbierendes Polymers W am Verbundstoff 5 bis 95, insbesondere 10 bis 90 und besonders bevorzugt 15 bis 85 Gew.-%.

Die Dicke des Verbundstoffs kann je nach dem verwendeten Trägermaterial, z.B. Gewebe oder Vlies, in weiten Grenzen variieren.

In einer bevorzugten Ausgestaltung der Ausführungsform II) weist der Verbundstoff mindestens eine der folgenden beiden Eigenschaften α) und β) auf:
- α): Die Menge des im Verbundstoff enthaltenen wasserabsorbierenden Polymers W beträgt 20 bis 800, bevorzugt 50 bis 600 und besonders bevorzugt 60 bis 400 g pro Quadratmeter Verbundstoff,
- β): Die Wasseraufnahme des von Wasser überdeckten Verbundstoffs beträgt mindestens 10 Liter, bevorzugt mindestens 15 Liter pro Quadratmeter Verbundstoff, gemessen nach 30 min Lagerung in entionisiertem Wasser bei 20°C. Die Wasseraufnahme kann beispielsweise mit dem sog. Teebeuteltest in Anlehnung an die Testmethode "Absorbency II" 441.1-99, ISO/DIS 17190-6 der EDANA (European Disposables and Nonwovens Association) wie folgt gemessen werden:
Etwa 0,2 g Verbundstoff - dies entspricht je nach Verbundstoff z.B. einer Fläche von ca. 5 x 5 cm - werden ausgewogen (Gewicht m₁). Ein handelüblicher Teebeutel wird in destilliertes Wasser getaucht, abtropfen gelassen und ebenfalls ausgewogen (Gewicht m₂). Anschließend gibt man den Verbundstoff in den Teebeutel, verschließt den Beutel und lagert den gefüllten Teebeutel 30 min bei 20°C in destilliertem Wasser, sodass er vollständig mit Wasser bedeckt ist. Danach entnimmt man ihn aus dem Wasser, lässt 10 min abtropfen und bestimmt sein Gewicht m₃. Die Wasseraufnahme berechnet sich gemäß
(m₃ - m₂- m₁) /m₁
worin bedeuten:
m₁: Gewicht des eingewogenen, trockenen Verbundstoffs [g]
m₂: Gewicht des leeren, feuchten Teebeutels [g]
m₃: Gewicht des feuchten, den Verbundstoff enthaltenden Beutels [g].
Der erhaltene Wert (g Wasser pro 1 g trockner Verbundstoff) ist auf das Gewicht des Verbundstoffes bezogen; er wird umgerechnet auf die Fläche des Verbundstoffs und angegeben als Liter Wasser pro Quadratmeter Verbundstoff.

Ein in der vorstehenden Ausführungsform II) einsetzbarer Verbundstoff, der ein wasserabsorbierendes Polymer W enthält, ist beispielsweise als Luquafleece® von BASF im Handel erhältlich. Dabei handelt es sich um einen Vliesstoff, der einen Superabsorber enthält.

Der Verbundstoff wird durch Kleben, Pressen, Klammern, Vernadeln, Schweißen oder andere übliche Verbindungsverfahren auf der gewünschten Formteilfläche angebracht. Das Kleben, Pressen, Klammern, Vernadeln, Schweißen bzw. sonstige Verbinden kann vollflächig oder nicht vollflächig, beispielsweise punkt-, gitter-, streifen- oder linienförmig, oder in einer sonstigen sinnvollen Ausgestaltung erfolgen. Sofern der Verbundstoff weich und flexibel (biegsam) ist und sich deshalb der Formteiloberfläche gut anpasst, und/oder bei ebenen Formteilflächen, ist eine nicht vollflächige Verbindung oftmals ausreichend. Bei eher harten, spröden oder unflexiblen Verbundstoffen bzw. bei unebenen, profilierten oder gebogenen Formteilflächen kann eine vollflächige Verbindung vorteilhaft sein.

Bevorzugt verbindet man den Verbundstoff mit der Formteiloberfläche durch Kleben. Als Kleber eignen sich z.B. handelsübliche Ein- oder Zweikomponentenkleber. In Betracht kommen beispielsweise Kleber auf Basis von Polyurethanen, auf Basis von Epoxiden oder sog. Dispersionskleber. Als Dispersionskleber eignen sich u.a. solche auf Basis von Styrol oder anderen vinylaromatischen Monomeren, Alkylacrylaten oder anderen Acrylaten bzw. Methacrylaten, und/oder Butadien oder anderen Dienen. Derartige Dispersionskleber sind beispielsweise als Acronal® von BASF im Handel erhältlich.

Der Kleber wird in üblicher Weise auf die Formteiloberfläche aufgetragen, beispielsweise durch Sprühen, Spritzen, Streichen, Rollen, Gießen oder Tauchen. Die Dicke der Kleber-Schicht beträgt üblicherweise 5 bis 1000 µm (vor dem Aushärten bzw. Trocknen). In einer bevorzugten Ausführungsform wird der Kleber vollflächig aufgetragen.

In einer ebenfalls bevorzugten Ausführungsform wird die Formteilfläche mit einer Flammschutzbeschichtung versehen. Diese Flammschutzbeschichtung erfolgt besonders bevorzugt vor der Beschichtung mit dem wasserabsorbierenden Polymer. Als Flammschutzmittel eignen sich insbesondere Blähgraphit, Alkalimetallsilikate wie Wasserglas oder andere wasserlösliche Natrium- bzw. Kaliumsilikate, Zinkborate, Melaminverbindungen, Metallhydroxide wie z.B. Aluminiumhydroxid, oder Metallsalz-Hydrate wie z.B. Magnesiumsulfat-Decahydrat.

Ganz besonders bevorzugt kann man die Flammschutzbeschichtung mit der Ausführungsform II), also dem Aufbringen des Verbundstoffes, kombinieren. Zu diesem Zweck verbindet man den Verbundstoff mit der Formteiloberfläche wie beschrieben durch - bevorzugt vollflächiges - Kleben mit einem Kleber, der ein Flammschutzmittel enthält. Die Kleberschicht ist somit zugleich eine Flammschutzschicht. Der Flammschutzmittelgehalt eines solchen Flammschutz-Klebers beträgt üblicherweise 2 bis 98, bevorzugt 40 bis 80 Gew.-%.

Zur weiteren Verbesserung des Brandverhaltens kann auch das expandierte Polystyrol selbst Flammschutzmittel enthalten, beispielsweise solche wie vorstehend beschrieben. Flammschutzmittel können im expandierten Polystyrol, oder im Kleber, oder im expandierten Polystyrol und im Kleber, enthalten sein. Im letztgenannten Fall können die Flammschutzmittel gleich oder verschieden sein.

Die Raumform der mit dem wasserabsorbierenden Polymer W beschichteten Formteile richtet sich nach ihrer Verwendung. Bevorzugt sind die Formteile ausgewählt aus Platten, Blöcken (Quadern), Winkeln und Abschlussprofilen. Platten bzw. Blöcke (Quader) kommen insbesondere zur Dämmung ebener Flächen (Innenwände) in Betracht. Winkel eignen sich bevorzugt zur Dämmung von Kanten, Vorsprüngen und Aussparungen, beispielsweise an Fenster- oder Türdurchbrüchen. Abschlussprofile stellen beispielsweise den bündigen Abschluss der Dämmung zu Decke, Boden, Fenster, Türen oder einer anderen Wand her.

Die Dicke (Höhe) der Formteile hängt von der gewünschten Dämmwirkung ab und kann in weiten Grenzen variieren. Üblicherweise beträgt sie 1 bis 500 mm, bevorzugt 2 bis 400 mm und insbesondere 5 bis 300 mm, gerechnet inklusive der Beschichtung mit dem wasserabsorbierenden Polymer W, beispielsweise mit dem Verbundstoff.

Bevorzugt enthält das Wärmedämmverbundsystem eine reversibel wasserspeichernden Schicht aus einem auf ein Gewebe oder Vlies aus synthetischen Polymerfasern mit einem Flächengewicht von 20 bis 800 g/m², auf den das wasserabsorbierende Polymer W aufgebracht ist.

In einer weiteren Ausführungsform kann die reversibel wasserspeichernde Schicht des erfindungsgemäßen Wärmedämmverbundsystems aus einer Dämmstoffschicht, welche ein wasserabsorbierendes Polymer enthält, bestehen.

Hierzu kann man eine Mischung aus wasserabsorbierendem Polymer und Schaumstoffpartikeln in eine Form zur Bildung der reversibel wasserspeichernden Schicht verteilen, anschließend eine weitere Schicht aus Schaumstoffpartikel aufbringen und mit Heißluft oder Wasserdampf zu dem Wärmeverbundsystemverschweißen.

Beispielsweise kann das wasserabsorbierende Polymer W in Pulverform mit dem expandierbaren Polystyrol oder den vorgeschäumten Polystyrolschaumstoffperlen beschichtet oder trocken vermischt werden und in eine Form eingebracht werden. Während des Versinterns verteilt sich dann das wasserabsorbierende Polymer W in den Zwickeln des Polystyrol-Partikelschaumstoffes.

Dieses Verfahren verwendet werden, um, analog der Herstellung von Formteilen mit höherer Materialdichte am Rand, ein Formteil herzustellen, dass im Volumen einen Teil Polymer W verteilt und auf einer Seite im Rand einen deutlich größeren Anteil von Polymer W enthält. Dadurch kann das ganze Element der Wasserfilmbildung vorbeugen und speziell im kalten Wandbereich lässt sich so eine möglichst hohe Aufnahmekapazität realisieren.

Die Dämmstoffe können bereits als fertig verbaubares System hergestellt werden, indem man die Formteile mit Platten z.B. aus Gips, Holz oder anderen Wandbaustoffen verbindet, z.B. durch Kleben.

Wenn die Dämmstoffplatte aus Polyurethan besteht,. kann das fertige Formteil mit dem wasserabsorbiernden Polymer W oder dem Vlies beschichtet werden oder bereits vor dem Schäumen (physikalisch oder physikochemisch) in die Polyolkomponente eingemischt werden. Wird das Schäumen in zwei Phasen durchgeführt, lassen sich so Formteile herstellen, die auf einer Seite im Rand eine größere Menge von Polymer W enthalten als im restlichen, wesentlich größeren Volumen des Wärmedämmverbundsystems.

Das Formteil kann auch aus Polypropylenschaumstoff bestehen. Auch hier kann das fertige Formteil mit dem Polymer W oder dem Vlies beschichtet werden. Außerdem kann das Polymer W bereits vor dem Schäumen (physikalisch oder physikochemisch) mit dem PP-Rohstoff vorgemischt werden. Wird das Schäumen in zwei Phasen durchgeführt, lassen sich so Formteile herstellen, die auf einer Seite im Rand eine größere Menge von Polymer W enthalten als im restlichen, wesentlich größeren Volumen des Dämmelementes.

Das erfindungsgemäße Wärmedämmverbundsystem eignet sich insbesondere zur Innendämmung von Gebäuden. Bei Verwendung eines Wärmedämmverbundsystems mit nur einseitig wasserspeichernder Schicht, wir diese in der Regel zur Aussendwandseite angebracht. Die hoch reversibel wasserspeichernde Schicht verringert den Luftfeuchtegradient zwischen Innen- und Außenwand durch Absorption des Kondenswassers und verhindert dadurch die Schimmelbildung. Bei beidseitiger Beschichtung kann durch die dem Innenraum zugewandte wasserspeichernde Schicht zusätzlich das Raumklima positiv beeinflusst werden.

### Ausführung der Innendämmung

Bei dem erfindungsgemäßen Verfahren zur Innendämmung von Gebäuden kann man Formteile verwenden, bei denen alle Außenflächen oder (bevorzugt) nicht alle Außenflächen, besonders bevorzugt nur eine Außenfläche, mit dem wasserabsorbierenden Polymer W beschichtet sind. Bei plattenförmigen Formteilen ist diese eine Außenfläche bevorzugt die Ober oder Unterseite (Vorder- oder Rückseite) und nicht die seitliche Kantenfläche.

In einer bevorzugten Ausführungsform ist das Verfahren dadurch gekennzeichnet, dass man die Formteile derart anbringt, dass die mit dem wasserabsorbierenden Polymer W beschichtete Fläche der Formteile zur Gebäudewand weist. Durch diese Anordnung kann die Raumluftfeuchtigkeit, die ansonsten hinter der Dämmschicht auf der (kalten) Gebäudewand kondensieren könnte und damit eine Schimmelbildung begünstigen würde, unmittelbar am Ort ihrer Entstehung von der Beschichtung mit dem wasserabsorbierenden Polymer W, aufgenommen werden.

Man kann die Formteile in üblicher Weise auf der Gebäudewand anbringen, beispielsweise durch Schrauben, Nageln, Kleben, unter Verwendung von Haken, Profilen, Schlagdübeln, Klebern oder anderen üblichen Hilfsmitteln.

Die Formteile, beispielsweise Schaumstoffplatten, können mit Formgebungen oder Elementen versehen sein, die eine Montage erleichtern und mit denen sich eine ebene, weitgehend fugenfreie Oberfläche erzielen lässt. Beispielsweise kann man die Seitenflächen bzw. Ränder der Platten als Nut-Feder-Verbindungen, Klemm-, Schnapp- oder Einrastverbindungen ausbilden. Sie lassen sich z.B. durch Bohrungen, Falze, Stege, Nuten, Ausschnitte oder mittels angeformter Zungen, Zapfen, Laschen o.ä. verwirklichen.

Außerdem kann man die Formteile mit einer oder mehreren Deckschichten aus Papier, Pappe, Karton, Gipskarton, Kunststoffen oder Metallen versehen. Die Deckschicht kann z.B. die mechanische Stabilität der Platte bzw. des sonstigen Formteils erhöhen (im Sinne einer Tragschicht), die akustischen Eigenschaften oder das Brandverhalten verändern, und/oder als Dekorschicht dienen. Es können geschlossene Deckschichten oder solche mit Aussparungen aufgebracht werden; letztere sind beispielsweise Lochplatten, Gitter oder Netze.

Das Aufbringen (Kaschieren) erfolgt beispielsweise durch Kleben, Pressen oder andere übliche Kaschierverfahren. Insbesondere bei einer geschlossenen Deckschicht wird diese bevorzugt auf einer Fläche angebracht, die nicht mit dem wasserabsorbierenden Polymer W beschichtet ist, da eine geschlossene Deckschicht die Feuchtigkeitsaufnahme und -abgabe des Polymers W behindern könnte.

Gegenstand der Erfindung ist ebenfalls eine mit einer Innendämmung versehene Gebäudewand, erhältlich nach dem beschriebenen Verfahren zur Innendämmung.

Mit dem Verfahren lassen sich Innenräume aller Art dämmen, insbesondere Wohnräume, Geschäftsräume und Lager- oder Produktionsräume. Besonders geeignet ist das Verfahren zur Innendämmung von Räumen, in denen diskontinuierlich (stoßweise) viel Feuchtigkeit freigesetzt wird, beispielsweise Küchen, Duschräumen und Bädern, da der plötzliche Anstieg und Wiederabfall der Luftfeuchtigkeit abgeschwächt (ausgeglichen) wird. Gegenstand der Erfindung ist daher auch ein Gebäudeinnenraum, bei dem mindestens eine Wand eine mit einer Innendämmung versehene Gebäudewand ist, wie sie weiter oben beschrieben wurde.

Bevorzugt werden mit dem Verfahren die Innenseiten von Gebäudeaußenwänden gedämmt, da deren Oberfläche kälter ist als diejenige von Innenwänden, z.B. Raumtrennwänden, und daher anfälliger ist für das unerwünschte Kondensieren von Raumluftfeuchtigkeit.

Aus dem Vorstehenden ergibt sich als weiterer Erfindungsgegenstand die Verwendung von Formteilen aus Dämmstoffen, die mit einem wasserabsorbierenden Polymer W ausgestattet sind , zur Innendämmung von Gebäuden. Bevorzugt ist diese Verwendung gekennzeichnet durch mindestens eines der weiter oben beschriebenen kennzeichnenden Merkmale des Verfahrens zu Innendämmung.

Bei der vorliegenden Erfindung schließt der Begriff "Gebäude" auch andere geschlossene Räume ein, beispielsweise Transport- und Aufbewahrungsbehälter, Frachtcontainer, Güterwaggons, Laderäume von Flugzeugen, Raumfahrzeugen, Schiffen und Fahrzeugen (Pkw, Lkw, Schienenfahrzeuge, etc.). Das Verfahren eignet sich demnach auch zur Innendämmung derartiger Behälter, Frachtcontainer, Waggons bzw. Laderäume. Der Begriff "Gebäudewand" umfasst dementsprechend auch die Wände anderer geschlossener Räume, beispielsweise Behälterwände, Frachtcontainerwände, Waggonwände und Laderaumwände.

Bei den nach dem Verfahren erhältlichen gedämmten Gebäudewänden ist die Gefahr von Feuchtigkeitsschäden wie beispielsweise Schimmelbildung deutlich geringer. Au-ßerdem ist das Raumklima des gedämmten Innenraums verbessert und weist verminderte Luftfeuchtigkeitsschwankungen auf.

### Beispiele

Es wurden folgende Einsatzstoffe verwendet:

### Polystyrolpartikel:

Handelsübliche, treibmittelhaltige, nicht expandierte Polystyrolpartikel.

### Kleber:

Es wurde ein handelsüblicher Epoxidkleber verwendet.

### Superabsorber-Vlies:

Man verwendete ein 3 mm dickes, einen Superabsorber enthaltendes Vlies. Es handelte sich um ein Vlies aus Polypropylen, auf das ein wasserabsorbierendes Polymer auf Basis von vernetzter Acrylsäure aufpolymerisiert war. Als Vernetzer wurde Polyethylenglykoldiacrylat verwendet, und etwa 60 mol-% der Acrylsäuregruppen waren neutralisiert.

### Vergleichsversuch 1V

Die Polystyrolpartikel wurden in einer handelsüblichen Vorschäumapparatur mit 0,2 bar Wasserdampfdruck vorgeschäumt. Die Schüttdichte der vorgeschäumten Partikel betrug 15 g/l, gemessen nach DIN EN ISO 60. Die vorgeschäumten Partikel wurden an der Luft zwischengelagert und anschließend in üblicher Weise mit Wasserdampf zu einem Formteil aus expandiertem Polystyrol mit den Abmessungen 100 x 100 x 50 mm und einer Schaumdichte von 18 g/l ausgeschäumt.

### Beispiel 1

Es wurde ein Formteil aus expandiertem Polystyrol hergestellt wie in Beispiel 1V beschrieben. Auf eine der beiden 100 x 100 mm großen Seiten des Formteils brachte man zunächst durch Streichen eine etwa 50 µm dicke Schicht des Klebers auf. Auf den Kleber wurde ein auf 100 x 100 mm zugeschnittenes Superabsorber-Vlies aufgelegt und angedrückt. Man ließ den Kleber 30 min bei 25°C aushärten.

### Untersuchung der Feuchtigkeitsaufnahme der Formteile

Das Formteil wurde in einem Klimaschrank gelagert und sein Gewicht im Abstand von 20 sec fortlaufend ermittelt. Es wurde folgendes Klimaprofil vorgegeben:

Zunächst (Startzeit t = 0) wurde das Formteil zwecks Gleichgewichtseinstellung 60 min bei einem Normalklima von 23°C und 50 % relativer Feuchte (RF) gelagert. Aus den letzten 10 Messwerten dieser Normalklima-Lagerung wurde das arithmetische Mittel gebildet; es stellte den Bezugspunkt (Nullpunkt) für die folgenden Messungen dar. Das Volumengewicht des Schaumstoffs [g/dm³] nach der Normalklima-Lagerung wurde ermittelt, siehe Tabelle. Ein hohes Volumengewicht entspricht einer hohen Feuchtigkeitsaufnahme.

Dem Normalklima folgte unmittelbar (ab t = 60 min) ein Feuchtklima mit 30°C und 90 % RF für die Dauer von 90 min. Aus den letzten 10 Messpunkten bei Feuchtklima wurde die flächenbezogene Feuchtigkeitsaufnahme [g/m²] ermittelt, siehe Tabelle.

Dem Feuchtklima folgte unmittelbar (ab t = 150 min) ein Trockenklima von 40°C und 40 % RF für die Dauer von 100 min. Die Tabelle nennt die flächenbezogene Feuchtigkeitsabnahme [g/m²], definiert als Messwert zu Beginn des Trockenklimas minus Messwert zum Ende des Trockenklimas.

Die Tabelle nennt außerdem den maximalen Einzelwert, der während des gesamten Klimaprofils (bis zum Ende der Trockenphase bei t = 250 min) gemessen wurde, und zwar bezogen auf die Fläche des Formteils [g/m²], sein Gewicht [g/100g Formteil] und sein Volumen [g/dm³].

Die Tabelle fasst die Ergebnisse zusammen.

**Tabelle (V zum Vergleich)**

| Beispiel | 1V | 1 |
|---|---|---|
| Volumengewicht nach 60 min Normalklima (23°C, 50 % RF) [g/dm³] | 12,2 | 43,0 |
| Flächenbezogene Feuchtigkeitsaufnahme nach 90 min Feuchtklima (30°C, 90 % RF)²⁾ [g/m²] | -17 ¹⁾ | 43 |
| Flächenbezogene Feuchtigkeitsabnahme nach 100 min Trockenklima (40°C, 40 % RF) ²⁾ [g/m²] | 52 | 76 |

| Maximaler Einzelwert der Feuchtigkeitsaufnahme bezogen auf | | |
|---|---|---|
| - Fläche [g/m²] | 38 | 51 |
| - Gewicht [g/100g] | 310 | 118 |
| - Volumen [g/dm³] | 3,4 | 3,5 |

| | | |
|---|---|---|
| 1) negatives Vorzeichen bedeutet Feuchtigkeitsabgabe 2) bezogen auf Feuchtigkeitsgehalt am Ende der Normalklimalagerung | | |

Wie sich aus den Volumengewichten am Ende der Normalklima-Lagerung ablesen lässt, wurde von den erfindungsgemäßen Formteilen (die ein Superabsorber-Vlies aufweisen) im Normalklima wesentlich mehr Feuchtigkeit aufgenommen als von dem nicht erfindungsgemäßen Formteil, das keine wasserabsorbierenden Polymere enthält.

Nach 90 min Feuchtklima-Lagerung hatten die erfindungsgemäßen Formteile 43 g Feuchtigkeit (Wasser) pro Quadratmeter Formteiloberfläche aufgenommen. Hingegen gab das nicht erfindungsgemäße Formteil 17 g Feuchtigkeit pro m² ab.

Nach weitern 100 min Trockenklimalagerung hatten die erfindungsgemäßen Formteile 76 g Feuchtigkeit pro Quadratmeter Formteiloberfläche abgegeben, bezogen auf den Feuchtigkeitsgehalt am Ende der Normalklimalagerung. Hingegen gab das nicht erfindungsgemäße Formteil 52 g Feuchtigkeit pro m² ab.

Zur Beurteilung der Luftfeuchtigkeits-Schwankungen wurden außerdem die einzelnen, im 20 sec-Abstand aufeinander folgenden Messwerte betrachtet. Bei den erfindungsgemäßen Formteilen lagen der höchste und der niedrigste Einzelwert (entlang des gesamten Klimaprofils von t = 0 bis t = 250 min) enger beieinander als beim Vergleichs-Formteil. Die Feuchtigkeitsaufnahme und -abgabe der erfindungsgemäßen Formteile war geringeren Schwankungen unterworfen als die des Vergleichs-Formteils. Bei den erfindungsgemäßen Formteilen stellten sich demnach geringere Schwankungen der Luftfeuchtigkeit und ein konstanteres Raumklima ein.

### Beispiel 2:

Expandierbares Polystyrol (Neopor® 2200 der BASF Aktiengesellschaft, Perlgröße des Rohstoffes 1,4 - 2,3 mm) wurde auf einem kontinuierlichen Vorschäumer auf eine Dichte von ca. 18 g/l vorgeschäumt. Nach einer Zwischenlagerungszeit von ca. 4 Stunden wurde auf dem selben Vorschäumer auf die gewünschte Dichte von 13 g/l nachgeschäumt. Die vorgeschäumten Polystyrolschaumpartikel hatten eine Partikelgröße im Bereich von 6 bis 10 mm.

Formteilversuche wurden mit Mischungen aus vorgeschäumten Neopor® 2200 und 5 Gewichtsprozent Luquasorb® durchgeführt. Dabei wurde die Form mit einem gemischten Materialstrom aus vorgeschäumten Neopor und verschiedenen Typen Luquasorb ® automatisch gefüllt und mit Dampf fertiggeschäumt. Die erhaltene Dämmstoffplatte wies eine homogene Verteilung von Luquasorb® in den Zwickelphasen zwischen den Schaumstoffperlen auf. Das Gewicht einer 5 cm dicken Platte mit einer Fläche von 0,1 m³ betrug 150 g. Sie enthielt 75 g Superabsorber (Luquasorb®) / Qudratmeter und eine Wasserspeicherfähigkeit vom 10-fachen des Eigengewichtes, entsprechend 750 g Wasser.

Bei ausreichenden mechanischen Eigenschaften kann die gefertigte Platte die normalen Feuchtigkeitsbelastungen erfolgreich aufnehmen und in trockenen Zeiten wieder abgeben.

## Patentansprüche

1. Wärmedämmverbundsystem, umfassend eine 5 bis 300 mm dicken Dämmstoffplatte, welche ein- oder beidseitig mit einer 1 bis 150 mm dicken, reversibel wasserspeichernden Schicht versehen ist.

2. Wärmedämmverbundsystem nach Anspruch 1, **dadurch gekennzeichnet, dass** die Dämmstoffplatte aus Polyurethan oder einem Partikel- oder Extrusionsschaumstoff auf Basis von Polystyrol oder Polyolefin besteht.

3. Wärmedämmverbundsystem nach Anspruch 1 oder 2, **dadurch gekennzeichnet, dass** die reversibel wasserspeichernde Schicht aus 5 bis 100 Gew.-% eines wasserabsorbierenden Polymeren W besteht.

4. Wärmedämmverbundsystem nach Anspruch 3, **dadurch gekennzeichnet, dass** das wasserabsorbierende Polymer W ein Säuregruppen tragendes Polymer ist, dessen Säuregruppen zu 10 bis 90 mol-% neutralisiert sind.

5. Wärmedämmverbundsystem nach Anspruch 4, **dadurch gekennzeichnet, dass** das wasserabsorbierende Polymer W eine vernetzte oder teilvernetzte Polyacrylsäure, Polymethacrylsäure oder ein Copolymer auf Basis von Acrylsäure ist.

6. Wärmedämmverbundsystem nach einem der Ansprüche 1 bis 5, **dadurch gekennzeichnet, dass** die reversibel wasserspeichernden Schicht aus einem auf ein Gewebe oder Vlies aus synthetischen Polymerfasern mit einem Flächengewicht von 20 bis 800 g/m² aufgebrachte wasserabsorbierenden Polymer W besteht.

7. Wärmedämmverbundsystem nach einem der Ansprüche 1 bis 5, **dadurch gekennzeichnet, dass** die reversibel wasserspeichernde Schicht aus einer Dämmstoffschicht, welche ein wasserabsorbierendes Polymer enthält, besteht.

8. Verfahren zur Herstellung einer reversibel wasserspeichernden Schicht, **dadurch gekennzeichnet, dass** man eine Mischung aus 5 bis 50 Gew.-% eines wasserabsorbierenden Polymeren und 95 bis 50 Gew.-% Schaumstoffpartikeln in einer Form verteilt und mit Heißluft oder Wasserdampf verschweißt.

9. Wärmedämmplatte, erhältlich nach dem Verfahren gemäß Anspruch 8.

10. Verfahren zur Herstellung eines Wärmedämmverbundsystems gemäß Anspruch 7, **dadurch gekennzeichnet, dass** man eine Mischung aus wasserabsorbierendem Polymer und Schaumstoffpartikeln in eine Form zur Bildung der reversibel wasserspeichernden Schicht verteilt, anschließend eine weitere Schicht aus Schaumstoffpartikel aufbringt und mit Heißluft oder Wasserdampf zu dem Wärmeverbundsystem verschweißt.

11. Verwendung des Wärmedämmverbundsystems nach einem der Ansprüche 1 bis 7 zur Innendämmung von Gebäuden.

12. Verwendung der Wärmedämmplatte nach Anspruch 9 zur Innendämmung von Gebäuden.
